# EUROPEAN PATENT APPLICATION

(11) **EP 4 625 239 A1**
(43) Date of publication of application: **01.10.2025**
(21) Application number: 25158694.7
(22) Date of filing: 18.02.2025
(51) Int. Cl.: G06F 30/392, G06F 30/398

(54) **SEARCH PROGRAM, SEARCH METHOD, AND INFORMATION PROCESSING APPARATUS**

(30) Priority: 29.03.2024 JP 2024057687
(71) Applicant: FUJITSU LIMITED, Kawasaki-shi, Kanagawa 211-8588 (JP)
(72) Inventor: HIDA, Masaharu, Kawasaki-shi, 211-8588 (JP); YAMAZAKI, Takashi, Chiyoda-ku, 100-8959 (JP)
(74) Representative: Haseltine Lake Kempner LLP

(57) **Abstract**

According to an aspect of the embodiments, a search program causing a computer to execute a process includes first processing of preparing a basic structure that includes a plurality of cells that serve as units of arrangement and non-arrangement of a target object in a predetermined region, second processing of dividing the basic structure into a plurality of local regions each of which includes a plurality of cells, third processing of, for each of the plurality of local regions, when an initial structure, which is a combination pattern of arrangement and non-arrangement of the target object included in the local region in the basic structure, is set to a combination pattern of arrangement and non-arrangement of the target object different from the initial structure, performing a search for arrangement and non-arrangement in the cells such that characteristics of the predetermined region as a whole are improved and searching for an improved structure in which the characteristics are improved, and fourth processing of, for each of the plurality of local regions, creating a plurality of combinations of the initial structure and the improved structure in the predetermined region as pieces of teacher data by designating any of the initial structure and the improved structure, and searching for arrangement and non-arrangement of the target object in the cells of the predetermined region by using the plurality of pieces of teacher data.

## Description

### FIELD

The embodiment discussed herein is related to a search program, a search method, and an information processing apparatus.

### BACKGROUND

Optimization of a conductor pattern or the like of a circuit board is desired.

### Citation List

### Patent document

International Publication Pamphlet No. 2005/015449
U.S. Patent Publication No. 2022/0215146
U.S. Patent Publication No. 2012/0110540

### SAMMARY OF INVENTION

### TECHNICAL PROBLEM

However, it takes time to optimize the pattern. Even when the pattern is optimized, desired characteristics may not be obtained.

In one aspect, it is desirable to provide a computer-readable recording medium storing a search program, a search method, and an information processing apparatus that are capable of searching for a desired pattern in a short time.

### SOLUTION TO PROBLEM

According to an aspect of the embodiments, a search program causing a computer to execute a process includes first processing of preparing a basic structure that includes a plurality of cells that serve as units of arrangement and non-arrangement of a target object in a predetermined region, second processing of dividing the basic structure into a plurality of local regions each of which includes a plurality of cells, third processing of, for each of the plurality of local regions, when an initial structure, which is a combination pattern of arrangement and non-arrangement of the target object included in the local region in the basic structure, is set to a combination pattern of arrangement and non-arrangement of the target object different from the initial structure, performing a search for arrangement and non-arrangement in the cells such that characteristics of the predetermined region as a whole are improved and searching for an improved structure in which the characteristics are improved, and fourth processing of, for each of the plurality of local regions, creating a plurality of combinations of the initial structure and the improved structure in the predetermined region as pieces of teacher data by designating any of the initial structure and the improved structure, and searching for arrangement and non-arrangement of the target object in the cells of the predetermined region by using the plurality of pieces of teacher data.

### EFFECT OF INVENTION

A desired pattern may be searched for in a short time.

### BRIEF DESCRIPTION OF DRAWINGS

The invention is described, by way of example only, with reference to the following drawings, in which:
FIG. 1A is a perspective view illustrating a part of an analog circuit board used for a band-pass filter or the like, and FIG. 1B is a plan view of the analog circuit board;
FIG. 2 is a diagram illustrating characteristic values;
FIG. 3A is a block diagram illustrating an overall configuration of an information processing apparatus, and FIG. 3B is a block diagram illustrating a hardware configuration of the information processing apparatus;
FIG. 4 is a flowchart representing processing executed by the information processing apparatus;
FIG. 5 is a flowchart representing the processing executed by the information processing apparatus;
FIG. 6 is a diagram illustrating division of a basic structure;
FIGs. 7A to 7C are diagrams for describing simulation results;
FIGs. 8A to 8C are diagrams for describing simulation results;
FIGs. 9A and 9B are diagrams for describing simulation results;
FIGs. 10A to 10C are diagrams for describing simulation results; and
FIGs. 11A to 11C are diagrams for describing simulation results.

### DESCRIPTION OF EMBODIMENTS

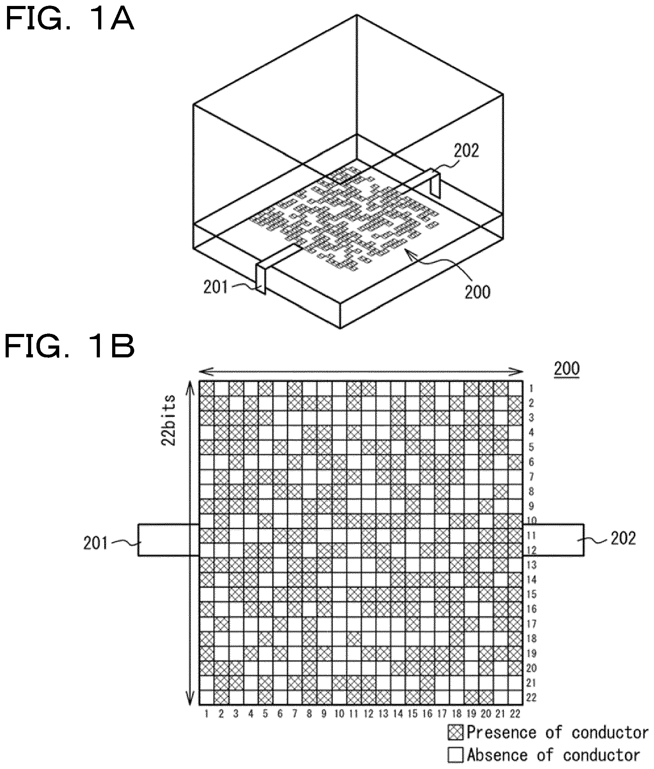

Before describing an embodiment, an outline of optimization of a circuit board will be described. FIG. 1A is a perspective view illustrating a part of an analog circuit board used for a band-pass filter or the like. FIG. 1B is a plan view of the analog circuit board. As illustrated in FIG. 1A and FIG. 1B, a first conductor 201 and a second conductor 202 are coupled to both ends of a front surface pattern 200. When a voltage is applied across the first conductor 201 and the second conductor 202, a current flows from the first conductor 201 toward the second conductor 202 through the front surface pattern 200, or a current flows from the second conductor 202 toward the first conductor 201 through the front surface pattern 200.

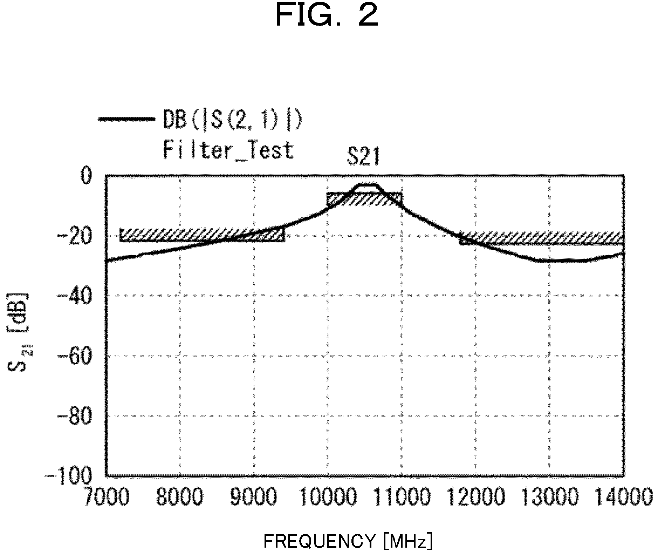

In the circuit board, a change in resistance due to a pattern shape (length and width) of the front surface pattern 200, a change in capacitance due to a state between patterns, and the like affect frequency characteristics. Accordingly, optimization of the pattern shape of the front surface pattern 200 is desired. For example, in a case where the front surface pattern 200 includes a pattern (for example, a fully formed pattern) in which a conductor is formed in an entire region of a predetermined region allocated to the front surface pattern 200, favorable frequency characteristics may not be obtained. Accordingly, the front surface pattern 200 has a pattern shape in which a region where a conductor is formed and a region where a conductor is not formed coexist in the predetermined region described above. By searching for an optimum arrangement of the region where the conductor is formed and the region where the conductor is not formed, a favorable characteristic value (for example, frequency characteristics: cost value) may be obtained. The favorable characteristic value is illustrated in FIG. 2 as an example.

For example, the design of the front surface pattern 200 is performed by a person having a specialized skill. However, human resource development is desired to develop a person having a specialized skill. There is also a problem of lack of manpower. Accordingly, for example, it is considered that optimization is executed by using optimization calculation (particle swarm optimization) equipped in an electromagnetic field simulator. For example, it is considered that, by performing the optimization calculation of simulating the frequency characteristics for one type of pattern shape on different 10,000 types of pattern shapes, the optimization calculation is repeated 10,000 times to search for a front surface pattern having optimum frequency characteristics. With the above-described optimization calculation, however, since about 20 seconds are taken for one optimization calculation, about two days are taken for 10,000 times of optimization calculations.

Accordingly, in the following embodiment, an example in which even a person who does not have a specialized skill may search for a desired pattern in a short time will be described.

### [First Embodiment]

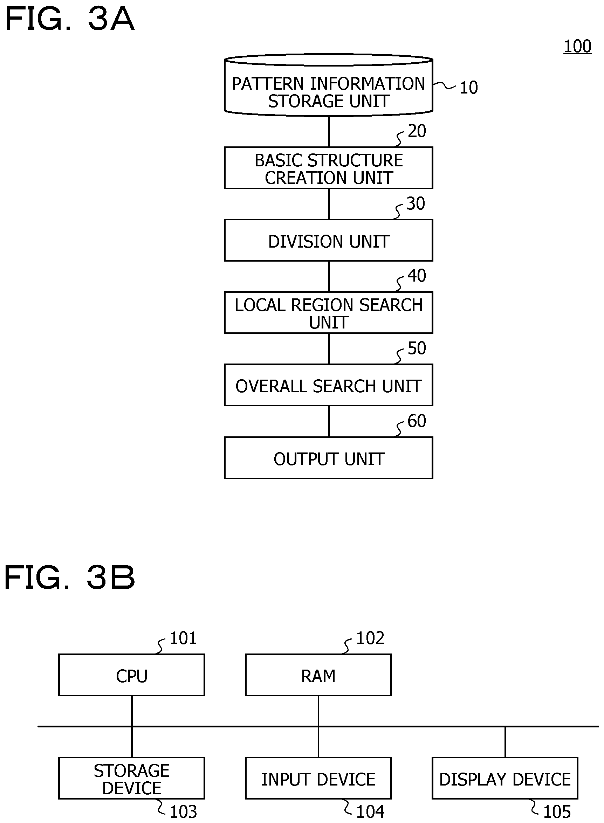

FIG. 3A is a block diagram illustrating an overall configuration of an information processing apparatus 100. As illustrated in FIG. 3A, the information processing apparatus 100 includes a pattern information storage unit 10, a basic structure creation unit 20, a division unit 30, a local region search unit 40, an overall search unit 50, an output unit 60, and the like.

FIG. 3B is a block diagram illustrating a hardware configuration of the information processing apparatus 100. As illustrated in FIG. 3B, the information processing apparatus 100 includes a central processing unit (CPU) 101, a random access memory (RAM) 102, a storage device 103, an input device 104, a display device 105, and the like.

The CPU 101 is a central arithmetic processing device. The CPU 101 includes one or more cores. The RAM 102 is a volatile memory that temporarily stores a program to be executed by the CPU 101, data to be processed by the CPU 101, and the like. The storage device 103 is a nonvolatile storage device. As the storage device 103, for example, a read-only memory (ROM), a solid-state drive (SSD) such as a flash memory, a hard disk driven by a hard disk drive, or the like may be used. The storage device 103 stores a work plan planning program. The input device 104 is an input device such as a keyboard or a mouse. The display device 105 is a display device such as a liquid crystal display (LCD). By the CPU 101 executing the work plan planning program, each unit in FIG. 3A is implemented. Hardware such as a dedicated circuit may be used as each unit illustrated in FIG. 3A.

The pattern information storage unit 10 stores information on the front surface pattern 200 that is a target to be optimized and described in FIG. 1A and FIG. 1B. As illustrated in FIG. 1A and FIG. 1B, the front surface pattern 200 has a predetermined region in which a conductor may be disposed. This predetermined region is an aggregate of a plurality of cells (arrangement unit). The conductor may be disposed in each cell. By way of example, the predetermined region described above includes 22 × 22 cells. For example, when the predetermined region described above has a rectangular shape, the predetermined region described above has 22 × 22 rectangular cells. The conductors may be disposed in these cells. Alternatively, the conductors may not be disposed in the cells. By combining arrangement and non-arrangement of the conductors in each cell in this manner, the front surface pattern 200 has a conductor pattern.

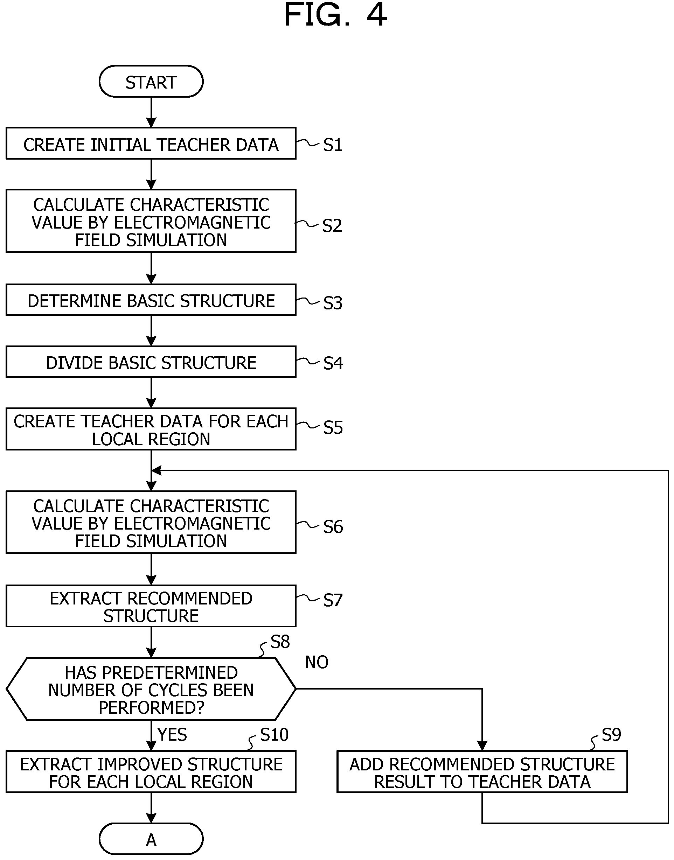

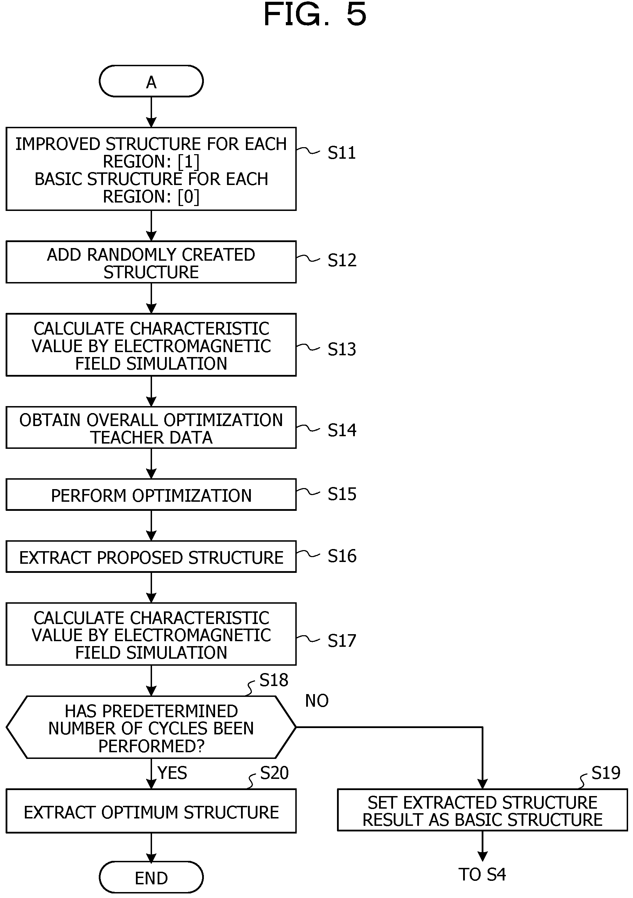

FIG. 4 and FIG. 5 are flowcharts representing processing executed by the information processing apparatus 100. With reference to FIG. 4 and FIG. 5, each processing executed by the information processing apparatus 100 will be described below.

First, the basic structure creation unit 20 creates a plurality of pieces of initial teacher data (step S1). For example, the basic structure creation unit 20 randomly creates the initial teacher data. In this case, arrangement and non-arrangement in each cell of the front surface pattern 200 are randomly combined in each piece of initial teacher data. Alternatively, a plurality of pieces of initial teacher data prepared by a user may be acquired as the initial teacher data.

By using an electromagnetic field simulation, the basic structure creation unit 20 calculates a characteristic value for each piece of initial teacher data (step S2). With this, a combination of a structure (pattern) of the front surface pattern 200 and the characteristic value may be set as initial teacher data.

By using an algorithm or the like, the basic structure creation unit 20 creates an optimum structure or a mean structure, and determines a basic structure for overall optimization (step S3). For example, the basic structure creation unit 20 may perform optimization with a small number of times by using optimization calculation equipped in an electromagnetic field simulator, or may perform optimization by applying an evolutionary algorithm or the like. In this case, the basic structure creation unit 20 sets data having a highest characteristic value among the obtained results as the basic structure. Alternatively, the basic structure creation unit 20 may set an average pattern of individual pieces of initial teacher data as the basic structure.

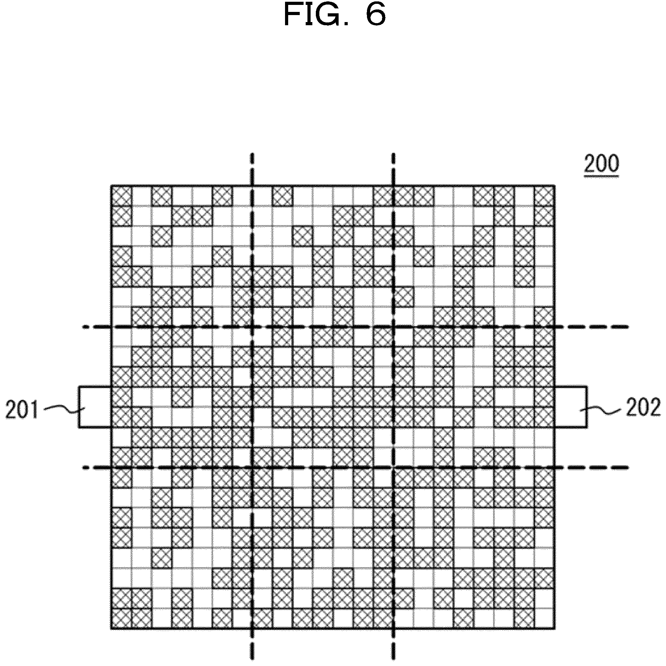

Next, the division unit 30 divides the basic structure determined in step S3 (step S4). In the example in FIG. 6, the front surface pattern 200 is divided into nine local regions. Each local region includes a plurality of cells.

Next, the local region search unit 40 creates teacher data for each local region obtained in step S4 (step S5). By randomly changing the arrangement and non-arrangement of each cell only in a target local region based on the basic structure, the local region search unit 40 creates ten pieces of teacher data, for example. For example, ten different pieces of data are created for a local region 1 in the basic structure. In this case, the basic structure is left unchanged for local regions 2 to 9, and ten pieces of data in which only data for the local region 1 is different are set as the ten pieces of teacher data. The same is performed for the other local regions 2 to 9. By way of example, since nine local regions are obtained in the example of FIG. 6, a total of 90 pieces of teacher data (local regions) are created.

By the electromagnetic field simulation, the local region search unit 40 calculates a characteristic value for each piece of teacher data in the target local region (step S6). Consequently, a combination of the structure (pattern) of the front surface pattern 200 and the characteristic value may be set as the teacher data.

The local region search unit 40 executes optimization of the target local region by using each piece of teacher data and extracts a recommended structure having a favorable characteristic value (step S7). While the optimization in this case is not particularly limited, for example, the optimization may be performed by using the optimization calculation equipped in the electromagnetic field simulator, or the evolutionary algorithm or the like may be performed.

Next, the local region search unit 40 determines whether or not step S7 has been performed a predetermined number of times (step S8). Alternatively, in step S8, it may be determined whether or not a predetermined condition is satisfied. For example, it may be determined whether or not the recommended structure obtained in step S7 satisfies a predetermined characteristic value.

When it is determined as "No" in step S8, the local region search unit 40 adds the result of the recommended structure extracted in step S7 to a teacher data group of the target local region (step S9). After that, the processing is executed again from step S6.

When it is determined as "Yes" in step S8, the local region search unit 40 extracts an improved structure of the target local region (step S10). For example, the local region search unit 40 extracts teacher data having a most favorable characteristic value as the improved structure (optimum structure) from among the teacher data group of the target local region.

Step S6 to step S10 described above are individually executed for each local region. Consequently, the improved structure is extracted for each local region.

By this point, the basic structure and the improved structure for each of the nine local regions are obtained. Since the nine local regions are included in the basic structures, nine basic structures (local regions) and nine improved structures (local regions) are obtained. Accordingly, next, the overall search unit 50 creates a new model by setting whether the basic structure or the improved structure is used as "1" or "0" in each region (step S11). When the basic structure is used, "0" is set, and when the improved structure is used, "1" is set. When the case of using the improved structure is assumed to be "1", data in which each local region is only "1" and data in which each local region is only "0" are already obtained.

Next, the overall search unit 50 adds a desired number of randomly created structures (step S12). For each local region, the result obtained in step S11 as to whether "0" of the basic structure is used or "1" of the improved structure is used is added to the teacher data.

With respect to the teacher data obtained in step S12, the overall search unit 50 calculates a characteristic value by the electromagnetic field simulation (step S13).

Next, the overall search unit 50 sets a combination of the teacher data and the characteristics as overall optimization teacher data (step S14).

By using the overall optimization teacher data obtained in step S14, the overall search unit 50 executes optimization (step S15). While the optimization in this case is not particularly limited, for example, the optimization may be performed by using the optimization calculation equipped in the electromagnetic field simulator, or the evolutionary algorithm or the like may be performed.

From among the results obtained in step S15, the overall search unit 50 extracts data having a highest characteristic value as a proposed structure (step S16).

With respect to the result obtained in step S16, the overall search unit 50 calculates a characteristic value by the electromagnetic field simulation (step S17).

Next, the overall search unit 50 determines whether or not step S16 has been performed a predetermined number of times (step S18). Alternatively, in step S18, it may be determined whether or not a predetermined condition is satisfied. For example, it may be determined whether or not the proposed structure obtained in step S16 satisfies a predetermined characteristic value.

When it is determined as "No" in step S18, the overall search unit 50 sets the proposed structure extracted in step S16 as the basic structure (step S19). After that, the processing is executed again from step S4.

When it is determined as "Yes" in step S18, the output unit 60 extracts and outputs data having a highest characteristic value among the results obtained by repeating step S11 to step S19 as an optimum structure (step S20).

With the present embodiment, in a case where a cell pattern different from the basic structure is used for each of the plurality of local regions, a search for arrangement and non-arrangement in the cells is executed such that the characteristics of the arrangement region of the front surface pattern 200 as a whole are favorable, and an improved structure in which the characteristics are improved is searched for. By designating any of the same initial structure as the basic structure and the improved structure for each of the plurality of local regions, a plurality of combinations of the initial structure and the improved structure are created as the pieces of teacher data in the arrangement region of the front surface pattern 200, and arrangement and non-arrangement of the conductor in the cells of the front surface pattern are searched for by using the plurality of pieces of teacher data. By doing so, it is possible to search for a desired pattern having favorable characteristics in a short time, as compared with a case where the overall optimization is repeated by using the optimization calculation equipped in the electromagnetic field simulation.

As the structure of each local region, the use of the improved structure for all the local regions is conceivable. However, even with the improved structure in which each local region is optimized, the entire region including the plurality of local regions does not necessarily have optimum characteristics. In this respect, in the present embodiment, by using the combination of the improved structure that is a candidate for the optimum structure and the basic structure, the optimum characteristics as a whole are searched for.

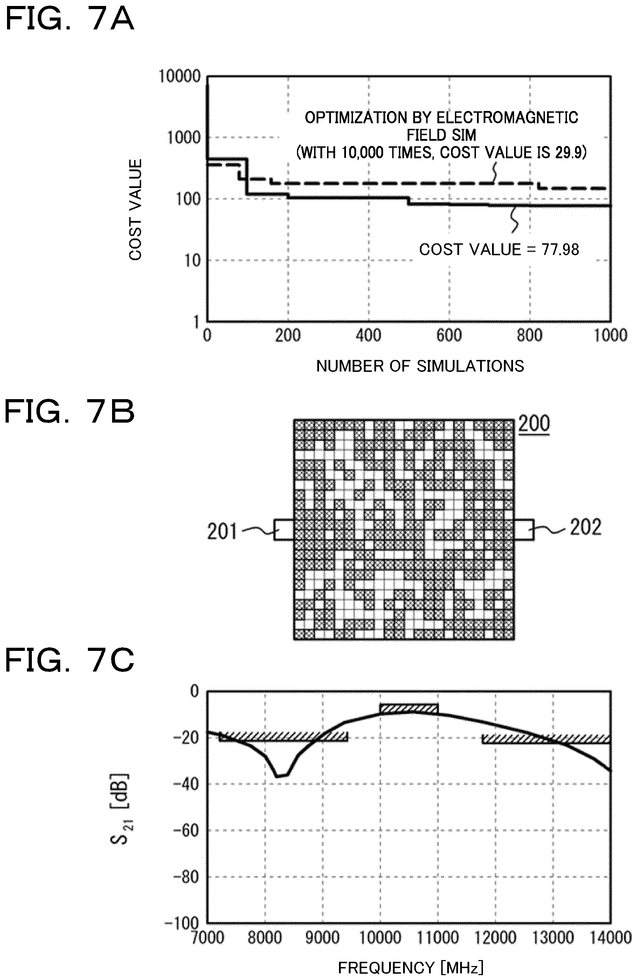

FIG. 7A to FIG. 7C are diagrams illustrating simulation results for creation of the basic structure. FIG. 7A is a diagram illustrating a relationship between a number of simulations and a cost value. FIG. 7B is a diagram illustrating the obtained basic structure. FIG. 7C is a diagram illustrating the obtained characteristic values. In the example of FIG. 7A, FMDA was used for optimization. The FMDA refers to replacing a QA portion of a factorization machine with quantum annealing (FMQA) with a digital annealer (DA). The number of pieces of initial teacher data was 100 pieces. As the simulation is repeated, it may be seen that the cost value is reduced and favorable results are obtained. With 1000 times of simulations, a basic structure having a cost value of 77.98 was obtained. FIG. 7A illustrates a result in a case where the simulation is repeated 10,000 times without using the local region as in the present embodiment.

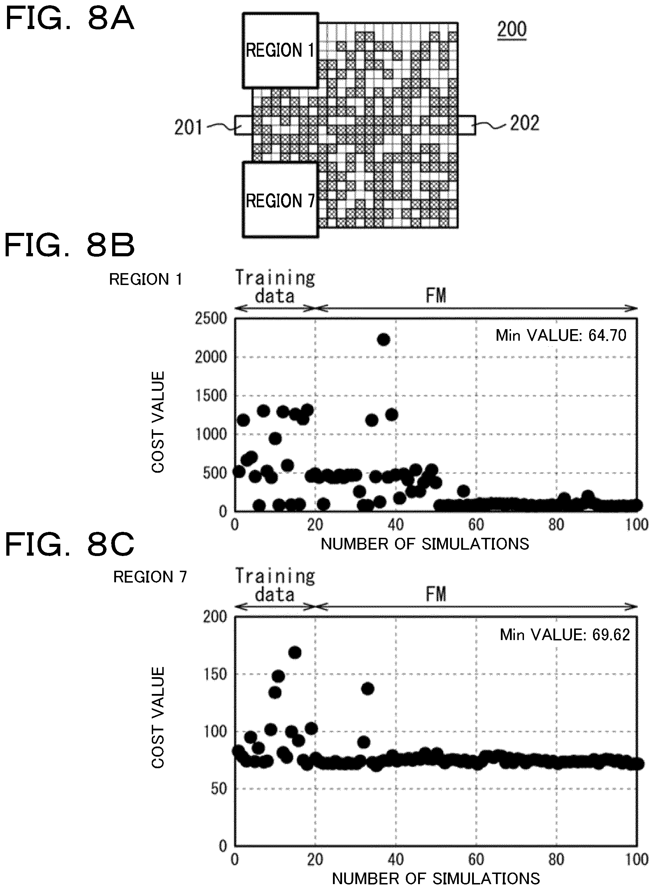

FIG. 8A illustrates a case where only the patterns of the local region 1 and the local region 7 are optimized, and the basic structure is left unchanged for the other local regions. FIG. 8B illustrates an optimization result in a case where only the pattern of the local region 1 is optimized. A minimum value (Min value) of the cost values of the local region 1 was 64.70. FIG. 8C illustrates an optimization result in a case where only the pattern of the local region 7 is optimized. The minimum value (Min value) of the cost values of the local region 7 was 69.62.

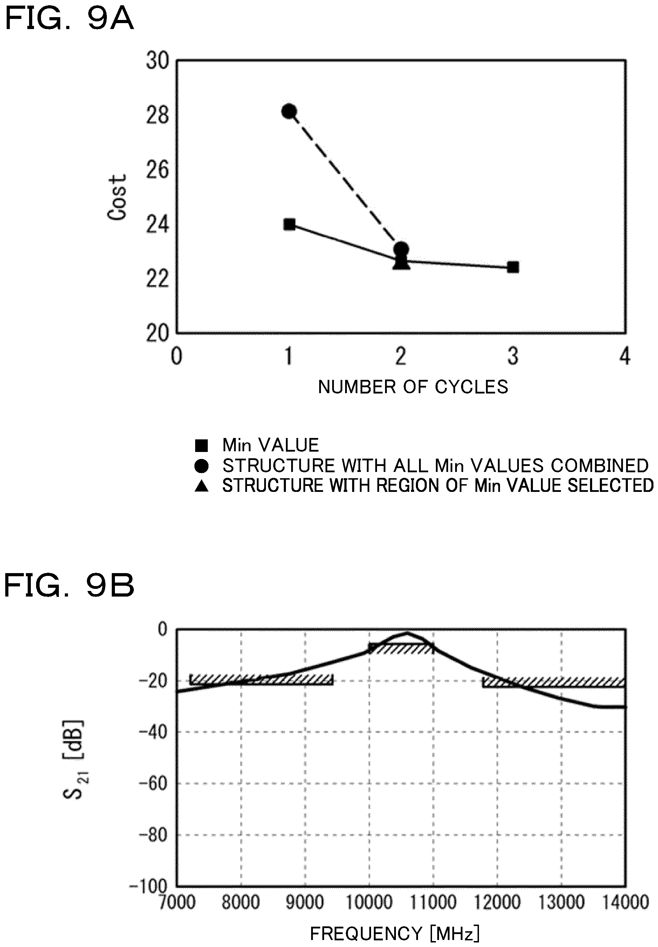

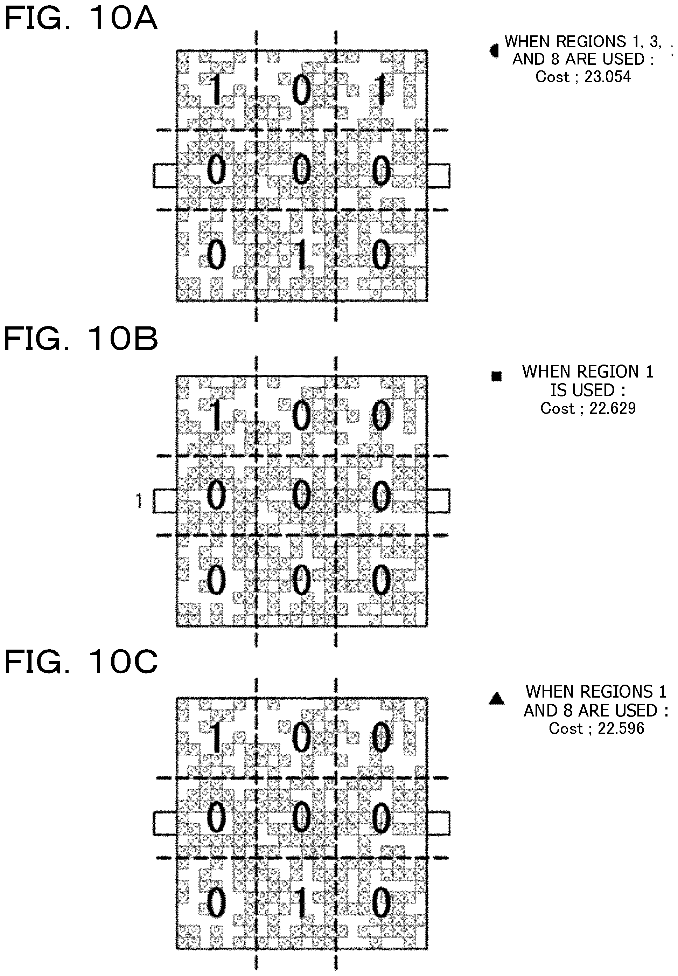

FIG. 9A and FIG. 9B illustrate a result of overall optimization. FIG. 10A to FIG. 10C are diagrams illustrating a position of the improved structure in each local region. FIG. 10A illustrates a case where the improved structure "1" is used only for the local regions 1, 3, and 8 and the basic structure "0" is used for the other local regions. FIG. 10B illustrates a case where the improved structure "1" is used only for the local region 1 and the basic structure "0" is used for the other local regions. FIG. 10C illustrates a case where the improved structure "1" is used only for the local regions 1 and 8 and the basic structure "0" is used for the other local regions. As illustrated in FIG. 9A, it may be seen that a favorable cost value is obtained as the result of the overall optimization.

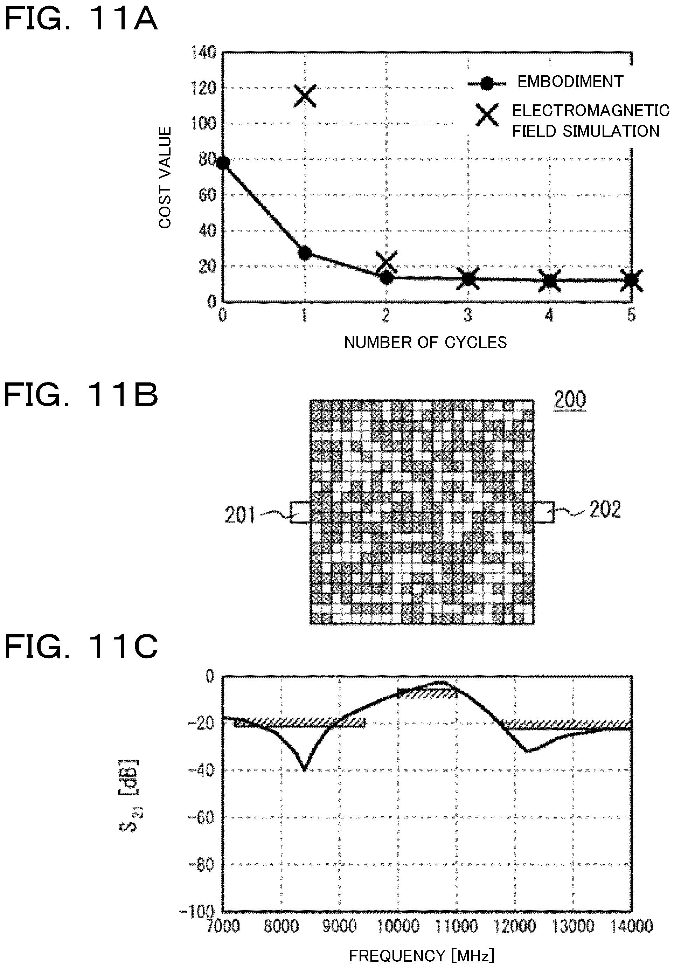

FIG. 11A to FIG. 11C are diagrams illustrating the result obtained by repeating step S11 to step S19 in FIG. 5. As illustrated in FIG. 11A, it may be seen that the cost value is significantly improved in a second cycle. Finally, the cost value was reduced to 12.08, which is less than or equal to one-sixth of the cost value (77.98) of the basic structure.

When the optimization calculation equipped in the electromagnetic field simulation is used without the division into the local regions, optimization was to be performed 10, 000 times until the result of the cost value = 29 was obtained.

By contrast, with the method according to the present embodiment, the number of times of execution of the FMDA for creating the basic structure was 1000 times as a process until the same cost value was obtained. With the number of local regions set to nine, the number of pieces of teacher data set to 20, and the number of cycles set to five, optimization was performed 900 times to create a local structure. In the overall optimization, ten pieces of teacher data were added, the number of cycles was increased by ten times for a total of 20 times as cycle results, and three cycles of overall optimization were performed, thereby reducing the number of times to 5760.

Although the embodiment of the present disclosure has been described above in detail, the present disclosure is not limited to such a particular embodiment and may be variously modified and changed within the scope of the gist of the present disclosure described in claims.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A search program causing a computer to execute a process comprising:
first processing of preparing a basic structure that includes a plurality of cells that serve as units of arrangement and non-arrangement of a target object in a predetermined region;
second processing of dividing the basic structure into a plurality of local regions each of which includes a plurality of cells;
third processing of, for each of the plurality of local regions, when an initial structure, which is a combination pattern of arrangement and non-arrangement of the target object included in the local region in the basic structure, is set to a combination pattern of arrangement and non-arrangement of the target object different from the initial structure, performing a search for arrangement and non-arrangement in the cells such that characteristics of the predetermined region as a whole are improved and searching for an improved structure in which the characteristics are improved; and
fourth processing of, for each of the plurality of local regions, creating a plurality of combinations of the initial structure and the improved structure in the predetermined region as pieces of teacher data by designating any of the initial structure and the improved structure, and searching for arrangement and non-arrangement of the target object in the cells of the predetermined region by using the plurality of pieces of teacher data.

2. The search program according to claim 1, wherein
the third processing and the fourth processing are further executed by using a result obtained in the fourth processing as the basic structure.

3. The search program according to claim 1 or 2, wherein
when the basic structure is prepared in the first processing, a plurality of pieces of teacher data for designating arrangement and non-arrangement of the target object in the cells in the predetermined region are prepared, and the basic structure is searched for by a predetermined algorithm by using the plurality of pieces of teacher data such that the characteristics are favorable.

4. The search program according to any of the preceding claims,
wherein
the target object is a conductor, and
the characteristics of the predetermined region are frequency characteristics.

5. A search method implemented by a computer, the search method comprising:
first processing of preparing a basic structure that includes a plurality of cells that serve as units of arrangement and non-arrangement of a target object in a predetermined region;
second processing of dividing the basic structure into a plurality of local regions each of which includes a plurality of cells;
third processing of, for each of the plurality of local regions, when an initial structure, which is a combination pattern of arrangement and non-arrangement of the target object included in the local region in the basic structure, is set to a combination pattern of arrangement and non-arrangement of the target object different from the initial structure, performing a search for arrangement and non-arrangement in the cells such that characteristics of the predetermined region as a whole are improved and searching for an improved structure in which the characteristics are improved; and
fourth processing of, for each of the plurality of local regions, creating a plurality of combinations of the initial structure and the improved structure in the predetermined region as pieces of teacher data by designating any of the initial structure and the improved structure, and searching for arrangement and non-arrangement of the target object in the cells of the predetermined region by using the plurality of pieces of teacher data.

6. The search method according to claim 5, wherein
the third processing and the fourth processing are further executed by using a result obtained in the fourth processing as the basic structure.

7. The search method according to claim 5 or 6, wherein
when the basic structure is prepared in the first processing, a plurality of pieces of teacher data for designating arrangement and non-arrangement of the target object in the cells in the predetermined region are prepared, and the basic structure is searched for by a predetermined algorithm by using the plurality of pieces of teacher data such that the characteristics are favorable.

8. The search method according to any of claims 5 to 7, wherein
the target object is a conductor, and
the characteristics of the predetermined region are frequency characteristics.

9. A information processing apparatus comprising:
a basic structure creating unit configured to prepare a basic structure that includes a plurality of cells that serve as units of arrangement and non-arrangement of a target object in a predetermined region;
a dividing unit configured to divide the basic structure into a plurality of local regions each of which includes a plurality of cells;
a local region searching unit configured to, for each of the plurality of local regions, when an initial structure, which is a combination pattern of arrangement and non-arrangement of the target object included in the local region in the basic structure, is set to a combination pattern of arrangement and non-arrangement of the target object different from the initial structure, search for arrangement and non-arrangement in the cells such that characteristics of the predetermined region as a whole are improved and search for an improved structure in which the characteristics are improved; and
a whole region searching unit configured to, for each of the plurality of local regions, create a plurality of combinations of the initial structure and the improved structure in the predetermined region as pieces of teacher data by designating any of the initial structure and the improved structure, and search for arrangement and non-arrangement of the target object in the cells of the predetermined region by using the plurality of pieces of teacher data.

10. The information processing apparatus according to claim 9, wherein the local region searching unit searches for the improved structure by using a search result obtained by the whole region searching unit as the basic structure.

11. The information processing apparatus according to claim 9 or 10,
wherein
when the basic structure creating unit prepares the basic structure, the basic structure creating unit prepares a plurality of pieces of teacher data for designating arrangement and non-arrangement of the target object in the cells in the predetermined region, and searches for the basic structure by a predetermined algorithm by using the plurality of pieces of teacher data such that the characteristics are favorable.

12. The information processing apparatus according to any of claims 9 to 11, wherein
the target object is a conductor, and
the characteristics of the predetermined region are frequency characteristics.
